# EUROPÄISCHE PATENTANMELDUNG

(11) **EP 1 842 712 A2**
(43) Veröffentlichungstag der Anmeldung: **10.10.2007**
(21) Anmeldenummer: 07006778.0
(22) Anmeldetag: 31.03.2007
(51) Int. Cl.: B60K 15/04

(54) **Vorrichtung zum Verhindern des Ausspritzens von Kraftstoff aus einem Kraftstofftank bei offenem Tankstutzen**

(30) Priorität: 07.04.2006 DE 202006006201 U
(71) Anmelder: Reutter Metallwarenfabrik GmbH, D-71336 Waiblingen (DE)
(72) Erfinder: Behnamrad, Kazem, 71364 Winnenden (DE); Körber, René, 71394 Lautenbach (DE)
(74) Vertreter: Dreiss, Fuhlendorf, Steimle & Becker

(57) **Zusammenfassung**

Bei einer Vorrichtung (10) zum Verhindern des Ausspritzens von Kraftstoffen aus einem Kraftstofftank bei offenem Tankstutzen (11) ist ein Einführrohr (15) vorgesehen, dessen inneres Ende mit einer beim Betanken zu öffnenden Zuhalteeinrichtung (20) versehen ist.

## Beschreibung

Die vorliegende Erfindung bezieht sich auf eine Vorrichtung zum Verhindern des Ausspritzens von Kraftstoff aus einem Kraftstofftank bei offenem Tankstutzen.

Insbesondere bei LKW's besteht bei nach dem Tanken unverschlossen gebliebenen Tankstutzen des vorzugsweise Dieselkraftstofftanks das Problem, dass beim Fahren der Kraftstoff, beispielsweise Diesel ausspritzt und die Fahrbahnen verschmutzt und rutschig werden lässt oder auf Baustellen das Erdreich verunreinigt.

Es besteht deshalb die Aufgabe, eine Vorrichtung für einen Kraftstofftank entweder als Nachrüstung für den Tankstutzen oder einen mit einer derartigen Vorrichtung versehenen Tankstutzen zu schaffen, bei der bzw. bei dem ein Ausspritzen von Kraftstoff auch dann verhindert ist, wenn der Kraftstofftankdeckel fehlt und daher der Tankstutzen unverschlossen ist.

Zur Lösung dieser Aufgabe ist eine Vorrichtung mit den Merkmalen nach Anspruch 1 geschaffen bzw. ausgerüstet.

Auf diese Weise ist der Tankstutzen durch die Zuhalteeinrichtung stets abgedeckt, die jedoch mit der Zapfpistole ohne weiteres geöffnet und damit der Kraftstofftank befüllt werden kann.

Vorteilhafte Ausgestaltungen des Einführrohres bzw. der Zuhalteeinrichtung ergeben sich aus den Merkmalen eines oder mehrerer der Ansprüche 2 bis 6.

Nach den Merkmalen des Anspruchs 7 ist eine derartige Vorrichtung in bevorzugter Weise als Tankstutzen-Einsatz ausgebildet, so dass Tankstutzen auch nachträglich mit einer derartigen Vorrichtung ausgerüstet werden können.

Vorteilhafte Ausgestaltungen zur Verwendung der Vorrichtung als Tankstutzen-Einsatz ergibt sich aus den Merkmalen eines oder mehrerer der Ansprüche 8 bis 12.

Mit den Merkmalen nach Anspruch 13 ist erreicht, dass ein derartiger Tankstutzen-Einsatz unlösbar verriegelbar im Tankstutzen gehalten werden kann und dadurch gegen Diebstahl gesichert ist.

Vorteilhafte Ausgestaltungen hinsichtlich Herstellung und Montage des Verriegelungselementes ergeben sich aus den Merkmalen eines oder mehrerer der Ansprüche 14 bis 19.

Gemäß einem weiteren bevorzugten Ausführungsbeispiel sind die Merkmale nach Anspruch 20 vorgesehen, so dass die Vorrichtung gleichermaßen auch mit einer Siebeinheit versehen werden kann. Dabei ist es gemäß den Merkmalen nach Anspruch 21 vorteilhaft, wenn die Siebeinheit mit dem Rohr lösbar verbunden werden kann.

Für die Ausgestaltung der Lösbarkeit ist es einerseits zweckmäßig, die Merkmale nach Anspruch 22 vorzusehen, und andererseits von besonderem Vorteil, wenn gemäß den Merkmalen nach Anspruch 23 das Verriegelungselement gleichzeitig als Befestigungsteil für das Sieb Verwendung finden kann.

Des weiteren bezieht sich gemäß den Merkmalen des Anspruchs 24 oder des Anspruchs 25 die Erfindung auf einen Tankstutzen, der mit einer derartigen Vorrichtung zum Verhindern des Ausspritzens von Kraftstoff aus dem Kraftstofftank unmittelbar versehen oder nachgerüstet ist.

Weitere Einzelheiten der Erfindung sind der folgenden Beschreibung zu entnehmen, in der die Erfindung anhand des in der Zeichnung dargestellten Ausführungsbeispieles näher beschrieben und erläutert ist. Es zeigen:
- Figur 1: in längsgeschnittener Darstellung in Form von zwei winklig versetzten Halbschnitten eine Vorrichtung zum Verhindern des Ausspritzens von Kraftstoff aus einem Kraftstofftank gemäß einem bevorzugten Ausführungsbeispiel vorliegender Erfindung, wobei das Einfüllende eines Tankstutzens strichpunktiert angedeutet ist,
- Figur 2: eine Draufsicht gemäß Pfeil II der Figur 1 auf den ergänzten linken Halbschnitt und
- Figur 3: in auseinandergezogener Darstellung die einzelnen Bauteile der Vorrichtung nach Figur 1.

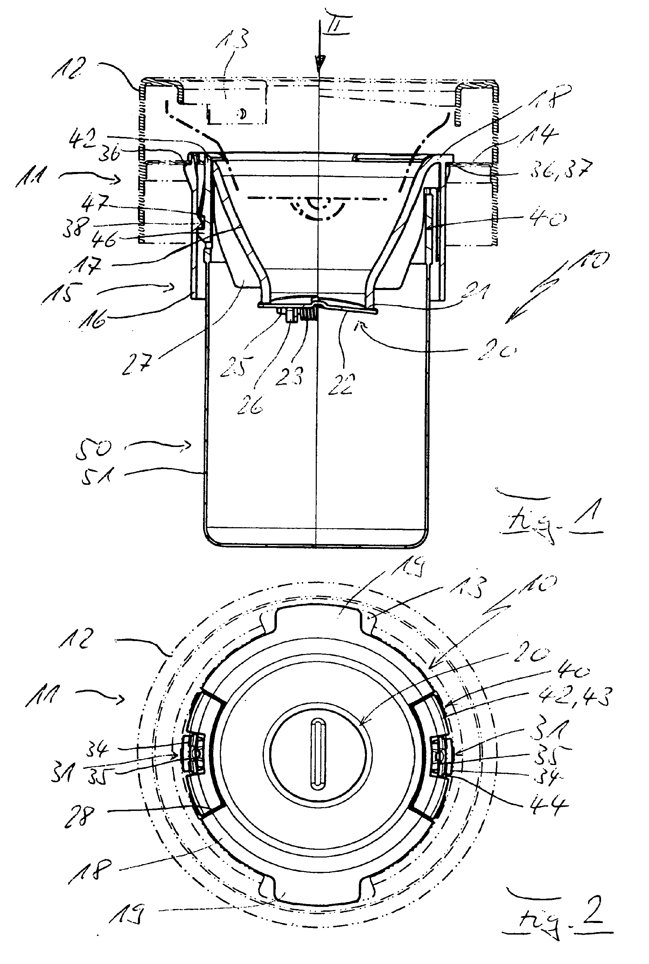

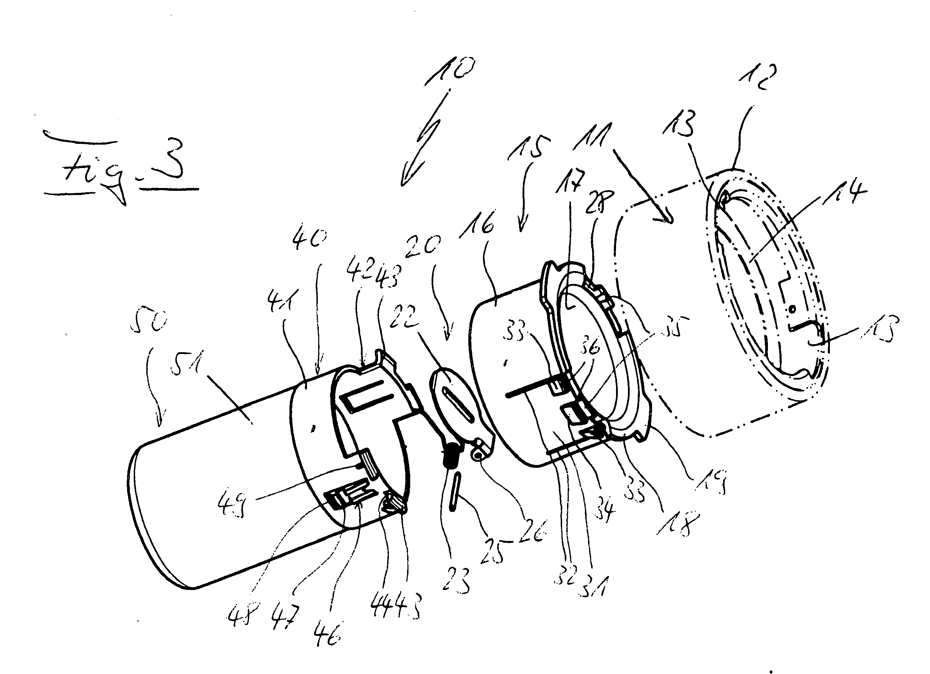

Die in der Zeichnung dargestellte Vorrichtung 10 dient zum Verhindern des Ausspritzens von Kraftstoff, insbesondere Diesel, aus einem Kraftstofftank dann, wenn der Tankstutzen 11 beispielsweise nach dem Tanken versehentlich unverschlossen ist, das heißt dann, wenn auf dem mit dem Einfüllende des Tankstutzens 11 verbundenen Renkunterteil 12 ein Tankdeckel fehlt. Die Vorrichtung 10 kann als Einsatz zur Nachrüstung in einen Tankstutzen vorgesehen sein.

Die Vorrichtung 10 besitzt ein Einführrohr 15 aus Kunststoff, das einstückig aus einer zylindrischen Außenwand 16 und einer konischen Innenwand 17 aufgebaut ist. Die beiden Wände 16 und 17 besitzen etwa dieselbe axiale Länge und sind ihren freien Enden abgewandt mit einem Halterand 18 in koaxialer Anordnung verbunden. Der Halterand 18 besitzt diagonal gegenüberliegende radiale Renkansätze 19, mit denen das Einführrohr 15 durch umfangsseitige Ausnehmungen 13 im Renkunterteil 12 in dieses bzw. den Tankstutzen 11 eingesetzt werden kann. Unterhalb des Renkunterteils 12 besitzt der Tankstutzen einen Auflagerand 14, auf dem der Halterand 18 mit den Renkansätzen 19 sowie mit der Unterseite der übrigen über den Außenumfang der zylindrischen Außenwand 16 ragenden Halterandbereiche aufsitzt. In noch zu beschreibender Weise wird das Einführrohr 15 mit dem Auflagerand 14 des Tankstutzens 11 verriegelnd verbunden.

Die konische Innenwand 17 verjüngt sich vom Halterand 18 ausgehend von oben nach unten und ist an seiner unteren durchmesserkleineren Öffnung 21 von einer Zuhalteeinrichtung 20 beim Ausführungsbeispiel in Form einer federbelasteten Klappe 20 im Ruhezustand abgedeckt bzw. verschlossen. Hierzu sind am Außenumfang der konischen Innenwand 17 der unteren Öffnung 21 zugewandt zwei parallele Lagerwangen 24 angeformt, die Lagerbohrungen für eine Achse 25 besitzen, die gleichfalls Bohrungen in Lageraugen 26 durchdringt, die einstückig an der Klappe 22 angeformt sind. Die Achse 25 ist von einer Schenkelfeder 23 umgeben, deren Schenkel sich einerseits an der Klappe 22 und andererseits am Außenumfang der konischen Innenwand 17 abstützen. Dadurch ist die Klappe 22 von der Schenkelfeder 23 ständig auf die untere Öffnung 21 der konischen Innenwand 17 gedrückt. Die konische Innenwand 17 ist durch axiale Stege 27, die sich längs des Außenumfanges der konischen Innenwand 17 erstrecken, verstärkt bzw. versteift. Zwischen den radialen Stirnseiten der axialen Stege 27 und dem Innenumfang der zylindrischen Außenwand 16 besteht ein Ringspalt, der in zwei diagonal gegenüberliegenden und hier um 180° zu den Renkansätzen 19 verdrehten Bereichen 28 des Halterandes 18 durchgängig ist. Mit anderen Worten, der Halterand 18 besitzt in diesen Bereichen eine Ausnehmung 28 zwischen zylindrischer Außenwand 16 und konischer Innenwand 17. Längs dieser beiden Umfangsbereiche ist die zylindrische Außenwand 16 mit diagonal gegenüberliegenden Rastlappen 31 versehen, die durch an den Halterandausnehmungen 28 beginnenden axiale Schlitze 32 in der zylindrischen Außenwand 16 gebildet sind. Die beiden Rastlappen 31 sind dadurch in radialer Richtung federnd. Die Rastlappen 31 besitzen jeweils nahe ihrem oberen Stirnrand radial nach außen vorstehende Rastnasen 33, die im Längsschnitt von unten nach oben keilförmig sind. Oberhalb der mittleren Rastnase 34 ist der Rastlappen 31 mittels eines Steges 35 axial bis etwa in Höhe der zur Oberseite des Halterandes 18 hin verlängert.

Die radialen Rastnasen 33 und 34 sind derart angeordnet, dass ihre Rastflächen 36 zur Unterfläche 37 des Halterandes 18 einen axialen Abstand besitzen, der gleich bzw. etwas größer als die Dicke des Auflagerandes 14 des Tankstutzens 11 ist.

Wird somit das Einführrohr 15 der Vorrichtung 10 von der Außenseite her durch das Renkunterteil 12 in den Tankstutzen 11 eingesetzt, werden die Rastlappen 31 dann, wenn die radialen Rastnasen 33 und 34 beider Rastlappen 31 am Innenumfang des Auflagerandes 14 des Tankstutzens 11 vorbeigelangen, radial nach innen federnd bewegt. Gelangen die Rastflächen 36 der Rastnasen 33, 34 unter den Auflagerand 14, bewegen sich die Rastlappen 31 aufgrund ihrer elastischen Vorspannung wieder radial nach außen. In diesem Zustand gelangen die Rastnasen 33, 34 mit ihren Rastflächen 36 unter den Auflagerand 14 während der Halterand 18 und die Renkansätze 19 mit ihrer Unterfläche 37 auf der Oberfläche des Auflagerandes 14 aufsitzen. Dadurch ist das Einführrohr 15 federnd verrastend in den Tankstutzen 11 eingeklipst. Das Einführrohr 15 könnte durch radiales Zusammendrücken der beiden axialen Stege 35 an den axial vorstehenden Rastlappen 31 aus dem Tankstutzen 11 wieder herausgenommen werden.

Das Befüllen eines nicht dargestellten Kraftstofftanks, vorzugsweise Dieseltanks, erfolgt trotz des im Ruhezustand verschlossenen Einführrohres 15 dadurch, dass mit Hilfe des Rohrstutzens einer Zapfpistole beim Eintauchen in den Tankstutzen 11 die Klappe 22 nach innen verschwenkt und damit geöffnet werden kann. Wird die Zapfpistole wieder herausgenommen, bewegt sich die Klappe 22 unter der Wirkung der Schenkelfeder 23 wieder zurück und deckt die Öffnung 21 von Innen her ab.

Die Vorrichtung 10 besitzt ferner ein Verriegelungselement 40, das mit dem Einführrohr 15 derart verbunden werden kann, dass das Einführrohr 15 am Auflagerand 14 im Tankstutzen 11 zerstörungsfrei unlösbar gehalten ist. Das Verriegelungselement 40 kann als reines Element zum Verriegeln des Einführrohres 15 ausgestaltet sein, es kann aber auch Teil einer Kraftstoff- insbesondere Diesel-Siebeinheit 50 sein.

Das Verriegelungselement 40, das einstückig aus Kunststoff hergestellt ist, besitzt einen Basisring 41, an dem an zwei diagonalen Bereichen axial sich erstreckende Verriegelungsansätze 42 über einen bestimmten der jeweiligen Ausnehmung 28 im Halterand 18 entsprechenden Umfangsbereich angeordnet sind. Die Verriegelungsansätze 42 besitzen an ihren den Basisring 41 abgewandten freien Ende einen radial nach außen zeigenden Rand 43, der mittig eine Ausnehmung 44 besitzt. Unterhalb der beiden verbleibenden Bereiche des Randes 43 ist jeweils ein Anlagesteg 49 vorgesehen, der radial über den Außenumfang des Verriegelungsansatzes 42 vorsteht und sich unterhalb des Randes 43 axial bis zum Beginn der genannten Schlitze erstreckt. Das radiale Maß der Anlagestege 49 ist geringer als das radiale Maß des Randes 43.

Unterhalb der Ausnehmung 44 ist im Bereich des Verriegelungsansatzes 42 sowie im Bereich des Basisringes 41 ein Rastfinger 46 vorgesehen, der durch zwei seitliche parallele Schlitze über den genannten axialen Bereich von Verriegelungsansatz 42 und Basisring 41 verlaufen, gebildet ist. Der federnd elastische Rastfinger 46 besitzt sein freies elastisch federnd bewegbares Ende nahe der Unterseite des Basisringes 41, also dem Rand 43 abgewandt. Am freien Endbereich ist der Rastfinger 46 mit einer Schrägfläche 48 und mit einer umfangsseitigen Nut 47 versehen.

Ist die Vorrichtung 10 mit der Siebeinheit 50 versehen, so ist das mit dem Einführrohr 15 zu verbindende Befestigungsteil der Siebeinheit 50 gleich dem Verriegelungselement 40, wie vorstehend beschrieben. Dieses Verriegelungselement 40 ist am freien Ringrand des Basisringes 41 mit einem korbartigen Sieb 51 fest verbunden, in welchem Schwebstoffe des Dieselkraftstoffes beispielsweise zurückgehalten werden.

Die Verbindung des Verriegelungselementes 40 als alleiniges Element oder als Bauteil der Siebeinheit 50 mit dem Einführrohr 15 erfolgt dadurch, dass außerhalb des Tankstutzens 11 das Verriegelungselement 40 von der Unterseite des Einführrohres 15 her zwischen die zylindrische Außenwand 16 und die konische Innenwand 17 geschoben wird, wobei die beiden umfangsseitigen Positionen von Einführrohr 15 und Verriegelungselement 40 derart sind, dass die Verriegelungsansätze 42 mit den Rastlappen 31 in der zylindrischen Außenwand 16 umfangsseitig positionsgleich sind. Mit dem Einführen des Verriegelungselementes 40 in den Ringraum zwischen zylindrischer Außenwand 16 und konischer Innenwand 17 werden zunächst die Verriegelungsansätze 42 radial nach innen gedrückt, so dass der Außenumfang des Randes 43 längs des Innenumfangs der zylindrischen Außenwand 16 bzw. der Rastlappen 31 entlang gleiten kann. Mit dem fortschreitenden axialen Bewegen des Verriegelungselementes 40 innerhalb des Einführrohres 15 werden die Rastlappen 31 radial nach außen bewegt, wobei sich die Verriegelungsansätze 42 wandinnenseitig an den axialen Versteifungsstegen der konischen Innenwand 17 abstützen. Die axiale Bewegung des Verriegelungselementes 40 innerhalb des Einführrohrs 15 erfolgt zunächst soweit, dass die Ränder 43 sich oberhalb des Halterands 18 befinden. Diese axiale Verschiebebewegung wird durch die Unterseite des Halterandes 18 begrenzt.

In dieser vorläufigen Verbindungsposition von Verriegelungselement 40 und Einführrohr 15 wird das Einführrohr 15 zusammen mit dem Verriegelungselement 40 bzw. der gesamten Siebeinheit 50 von außen durch das Renkunterteil 12 in den Tankstutzen 11 eingeschoben, so dass sich, wie bereits beschrieben, das Einführrohr 15 bzw. die zylindrische Außenwand 16 am Auflagerand 14 des Tankstutzens 11 verrastet. Danach wird das Verriegelungselement 40 ohne oder zusammen mit der Siebeinheit 50 axial nach innen bewegt, indem Druck auf die Verriegelungsansätze 42 bzw. deren Ränder 43 ausgeübt wird. Dies bedeutet, dass die Anlagestege 49 an den Verriegelungsansätzen 42 an den Innenumfang der Rastlappen 31 gelangen und diese in einer radialen Position fixiert halten, in der die Rastnasen 33, 34 unter den Auflagerand 14 im Tankstutzen 11 greifen. Außerdem liegen die Ränder 43 des Verriegelungselements 40 auf der Oberseite des Auflagerands 14 des Tankstutzens 11 auf. Der Steg 35 greift dabei in die Ausnehmung 44 der Ränder 43 ein. Die Rastfinger 46 greifen hinter diagonal gegenüberliegende radial nach hinten vorstehende Rastnasen 38 am Innenumfang der zylindrischen Außenwand 16, wobei diese in die Nut 47 der Rastfinger 46 gelangen und damit das Verriegelungselement 40 axial halten. Auf diese Weise ist ein unzerstörbares Herausnehmen der Vorrichtung 10 aus dem Tankstutzen 11 verhindert.

Es versteht sich, dass zum Nachrüsten eines Tankstutzens 11 mit Hilfe der Vorrichtung 10 dann, wenn der Tankstutzen 11 bereits mit einem Sieb versehen ist, dieses von der Siebstutzenauflage 14 im Tankstutzen 11 herausgenommen und durch eine Vorrichtung 10 mit einer Siebeinheit 50 ersetzt wird.

Des weiteren ist es in nicht dargestellter Weise möglich, einen Tankstutzen 11 bereits im Neuzustand unmittelbar mit einer derartigen Vorrichtung 10 mit oder ohne Siebeinheit 50 zu bestücken.

## Patentansprüche

1. Vorrichtung (10) zum Verhindern des Ausspritzens von Kraftstoffen aus einem Kraftstofftank bei offenem Tankstutzen (11), **gekennzeichnet durch** ein Einführrohr (15), dessen inneres Ende mit einer beim Betanken öffnenbaren Zuhalteeinrichtung (20) versehen ist.

2. Vorrichtung nach Anspruch 1, **dadurch gekennzeichnet, dass** das Einführrohr (15) eine sich von oben nach unten verjüngende (17) Wandung (17) aufweist.

3. Vorrichtung nach Anspruch 1 oder 2, **dadurch gekennzeichnet, dass** die Zuhalteeinrichtung (20) eine federbeaufschlagte Klappe (22) aufweist.

4. Vorrichtung nach mindestens einem der Ansprüche 1 bis 3, **dadurch gekennzeichnet, dass** das Einführrohr (15) eine zylindrische Außenwand (16) und eine konische Innenwand (17)aufweist, die am oberen Ende mit einem Halterand (18)koaxial verbunden sind.

5. Vorrichtung nach Anspruch 4, **dadurch gekennzeichnet, dass** die konische Innenwand (17)an ihrem der zylindrischen Außenwand (16) zugewandten Außenumfang mit axialen Versteifungsrippen (27) versehen ist.

6. Vorrichtung nach den Ansprüchen 3 und 4 und/oder 5, **dadurch gekennzeichnet, dass** die konische Innenwand (17) an ihrem Außenumfang einen Lagerwangen (24) für die federbeaufschlagte Klappe (22) besitzt.

7. Vorrichtung nach mindestens einem der vorhergehenden Ansprüche, **dadurch gekennzeichnet, dass** sie als Einsatz (10) für einen Tankstutzen (11) ausgebildet ist.

8. Vorrichtung nach Anspruch 7, **dadurch gekennzeichnet, dass** der Halterand (18) den Außenumfang der zylindrischen Außenwand (16) überragt.

9. Vorrichtung nach Anspruch 7 und/oder 8, **dadurch gekennzeichnet, dass** der Halterand (18) mit diagonal gegenüber liegenden Renkansätzen (19)versehen ist.

10. Vorrichtung nach mindestens einem der Ansprüche 7 bis 9, **dadurch gekennzeichnet, dass** die zylindrische Außenwand (16) mit diagonal gegenüberliegenden radial federnden Rastlappen (31) versehen ist.

11. Vorrichtung nach Anspruch 10, **dadurch gekennzeichnet, dass** jeder Rastlappen (31) mit einer oder mehreren radial vorstehenden Rastnasen (33, 34) versehen ist.

12. Vorrichtung nach mindestens einem der Ansprüche 7 bis 11, **dadurch gekennzeichnet, dass** die Unterseite (37) des Halterandes (18) und die Oberseite der Rastlappen (31) und/oder der Rastnasen (33, 34) axial beabstandet sind.

13. Vorrichtung nach mindestens einem der Ansprüche 7 bis 12, **dadurch gekennzeichnet, dass** ein Verriegelungselement (40) vorgesehen ist, das zwischen die zylindrische Außenwand (16) und die konische Innenwand (17) von deren offenen Unterseite her axial ein- und verschiebbar ist.

14. Vorrichtung nach Anspruch 13, **dadurch gekennzeichnet, dass** das Verriegelungselement (40) mit diagonal gegenüberliegenden Verriegelungsansätzen (42) bis über und in den Bereich des Halterandes (18) axial verschiebbar ist.

15. Vorrichtung nach Anspruch 14, **dadurch gekennzeichnet, dass** das Verriegelungselement (40) einen Ring (41) aufweist, an dem die Verriegelungsansätze (42) axial gerichtet und angeformt sind.

16. Vorrichtung nach Anspruch 14 oder 14, **dadurch gekennzeichnet, dass** die axialen Verriegelungsansätze (42) an ihren freien Enden einen radial ausladenden Rand (43) aufweisen.

17. Vorrichtung nach mindestens einem der Ansprüche 8 bis 16, **dadurch gekennzeichnet, dass** der Rand (43) des Verriegelungselementes (40) in eine axiale Ausnehmung (28) des Halterandes (18) greift.

18. Vorrichtung nach den Ansprüchen 16 und 10, **dadurch gekennzeichnet, dass** der Rand (43) des Verriegelungselementes (40) eine Ausnehmung (44) aufweist, in der bei in das Einführrohr (15) eingesetztem Verriegelungselement (40) ein axialer Steg (35) am Rastlappen (31) aufnehmbar ist.

19. Vorrichtung nach mindestens einem der Ansprüche 16 bis 18, **dadurch gekennzeichnet, dass** unterhalb des Randes (43) ein oder mehrere axial verlaufende und radial vorstehende Anlagestege (49) vorgesehen sind, an denen Innenflächenbereiche der federnden Rastlappen (31) anliegen.

20. Vorrichtung nach mindestens einem der vorhergehenden Ansprüche, **dadurch gekennzeichnet, dass** sie eine Kraftstoff-Siebeinheit (50) aufweist.

21. Vorrichtung nach Anspruch 20, **dadurch gekennzeichnet, dass** die Siebeinheit (50) am Einführrohr (15) lösbar befestigbar ist.

22. Vorrichtung nach Anspruch 20 oder 21, **dadurch gekennzeichnet, dass** die Siebeinheit (50) ein korbartiges Sieb (51) aufweist, das mit einem Einführrohr-Befestigungsteil (40) verbunden ist.

23. Vorrichtung nach Anspruch 22 und mindestens einem der Ansprüche 13 bis 19, **dadurch gekennzeichnet, dass** das Befestigungsteil durch das Verriegelungselement (40) gebildet ist.

24. Tankstutzen (11) mit einer Vorrichtung (10) zum Verhindern des Ausspritzens von Kraftstoff aus einem Kraftstofftank nach Anspruch 1 und ggf. mindestens einem der folgenden.

25. Tankstutzen (11) mit einem inneren Siebauflagerand (14), **dadurch gekennzeichnet, dass** eine Vorrichtung (10) zum Verhindern des Ausspritzens von Kraftstoff aus einem Kraftstofftank nach den Ansprüchen 2 und 7 und ggf. mindestens jeweils einem der folgenden am Siebauflagerand (14) befestigt ist.
